(19) Europäisches Patentamt
European Patent Office
Office européen des brevets

(11) EP 3 908 632 B1

(12) **EUROPEAN PATENT SPECIFICATION**

(45) Date of publication and mention of the grant of the patent:
**02.10.2024 Bulletin 2024/40**

(21) Application number: **20700146.2**

(22) Date of filing: **03.01.2020**

(51) International Patent Classification (IPC):
***C08L 95/00*** *(2006.01)* ***C08L 23/00*** *(2006.01)*

(52) Cooperative Patent Classification (CPC):
(C-Sets available)
**C08L 95/00; C08F 210/06;** C08L 2205/03;
C08L 2555/86 (Cont.)

(86) International application number:
**PCT/EP2020/050052**

(87) International publication number:
**WO 2020/144102 (16.07.2020 Gazette 2020/29)**

(54) **MIXTURES OF BITUMEN AND POLYMER COMPOSITIONS**

MISCHUNGEN AUS BITUMEN- UND POLYMERZUSAMMENSETZUNGEN

MÉLANGES DE BITUME ET DE COMPOSITIONS DE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2019 EP 19151121**

(43) Date of publication of application:
**17.11.2021 Bulletin 2021/46**

(73) Proprietor: **Basell Poliolefine Italia S.r.l.**
**20121 Milano (IT)**

(72) Inventors:
- **BAUDIER, Vincent**
**1050 Brussels (BE)**
- **BIONDINI, Gisella**
**44122 Ferrara (IT)**
- **CAVALIERI, Claudio**
**44122 Ferrara (IT)**
- **GALVAN, Monica**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:

| | |
|---|---|
| **EP-A1- 0 361 493** | **EP-A1- 0 592 852** |
| **EP-A1- 0 728 769** | **EP-A2- 0 045 977** |
| **EP-A2- 0 411 627** | **EP-A2- 0 496 625** |
| **WO-A1-2009/068371** | **WO-A1-2016/207235** |
| **WO-A1-2016/207236** | **WO-A1-2017/202600** |
| **US-A- 4 399 054** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 95/00, C08L 23/00;**
**C08L 95/00, C08L 23/08, C08L 23/0815,**
**C08L 23/12**

## Description

FIELD OF THE INVENTION

The present disclosure relates to mixtures comprising bitumen and polymer compositions. Polymer compositions are introduced in bitumen in order to modify its characteristics and make it more suitable for the use for which it is destined. In fact bitumens have various applications, such as the preparation of roofing, waterproofing sheet or road paving materials.

BACKGROUND OF THE INVENTION

Polymer compositions that can be used to modify bitumen, are already known in the art.

Published European patent application EP-A-411627 describes polymer compositions developed to be used in roofing applications. Said polymer compositions comprise two fractions, one of which is made up of a propylene homopolymer, and the other of a propylene-ethylene copolymer.

According to said patent application, the polymer compositions with the best properties for the use in bituminous mixtures for roofing must have an intrinsic viscosity (I.V.) ranging from 0.5 to 1.5 dl/g for both the above mentioned polymer fractions.

Published European patent application EP-A-592852 describes mixtures of bitumen and polymer compositions containing:

A) 10-40 parts by weight of a propylene homopolymer or a copolymer of propylene with up to 10% by weight of comonomer(s);
B) 0-20 parts by weight of a copolymer fraction containing over 55 wt% ethylene units, which is insoluble in xylene at room temperature;
C) 50-80 parts by weight of a copolymer fraction of ethylene with propylene or higher $\alpha$-olefins, said copolymer fraction being soluble in xylene at room temperature, and having an intrinsic viscosity in tetrahydronaphthaline at 135°C greater than 1.5 and up to 2.2 dl/g.

Such compositions achieve an improved set of properties, in particular flexibility at low temperature, resistance to penetration and softening, and ductility.

WO2009/068371 relates to a mixture comprising a polymer composition a bitumen A and a polymer composition B comprising (I) a butene polymer and II an heterophasic polyolefin composition. There are several differences with the claimed invention.

The applicant found that the modulus, and tensile properties of a bitumen composition can be improved by using a particular polymer compositions.

SUMMARY OF THE INVENTION

Object of the present disclosure is a mixture comprising:

T1) from 99 wt% to 75 wt% of bitumen , and
T2) from 1 wt% to 25 wt% of polymer composition comprising the following components,

A) 5-35% by weight of a propylene homopolymer or a propylene ethylene copolymer containing 90% by weight or more of propylene units; component A) containing 10.0 % by weight or less of a fraction soluble in xylene at 25°C (XSA), both the amount of propylene units and of the fraction XSA being referred to the weight of A);
B) 20-50% by weight; of a copolymer of ethylene and a C3-C8 alpha-olefin containing from 1.0 % to 20.0 % by weight of alpha-olefin units and containing 25.0 % by weight or less; of a fraction soluble in xylene at 25°C (XSB), both the amount of alpha-olefin units and of the fraction XSB being referred to the weight of (B); and
C) 30-60% by weight of a copolymer of ethylene and propylene containing from 25.0 % to 75.0 % by weight of ethylene derived units and containing from 40.0 % to 95.0% by weight of a fraction soluble in xylene at 25°C (XSC), both the amount of ethylene units and of the fraction XSC being referred to the weight of (C);

the amounts of (A), (B) and (C) being referred to the total weight of (A) + (B) + (C), the sum of the amount of (A) + (B) + (C) being 100;
the amounts, wt%, of T1 +T2 being 100 wt%.

DETAILED DESCRIPTION OF THE INVENTION

Object of the present disclosure is a mixture comprising:

T1) from 99 wt% to 75 wt% preferably from 98 wt% to 80 wt%; more preferably from 97 wt% to 90 wt% even more preferably from 97 wt% to 92 wt% of bitumen; and
T2) from 1 wt% to 25 wt%; preferably from 2 wt% to 20 wt%; more preferably from 3 wt% to 10 wt% even more preferably from 3 wt% to 8 wt% of polymer composition comprising the following components,

A) 5-35% by weight; preferably 10-30 % by weight; more preferably 15-23% by weight of a propylene homopolymer or a propylene ethylene copolymer containing 90.0% by weight or more preferably 95.0 % by weight or more; preferably 97.0 % by weight or more of propylene derived units; component A) containing 10.0% by weight or less preferably 8.0 wt% or less more preferably 6.0 wt% or less of a fraction soluble in xylene at 25°C (XSa), both the amount of propylene units and of the fraction $XS_A$ being referred to the weight of A);
B) 20-50% by weight; preferably 25-45% by weight; more preferably 30-40 % by weight of a copolymer of ethylene and a $C_3$-$C_8$ alpha-olefin containing from 1.0% to 20.0% by weight ; preferably from 5.0% to 15.0 % by weight; more preferably from 7.0 % to 12.0 % by weight of alpha-olefin derived units and containing 25.0 % by weight or less; preferably from 20.0 % by weight or less; preferably 17.0% by weight or less of a fraction soluble in xylene at 25°C ($XS_B$), both the amount of alpha-olefin units and of the fraction $XS_B$ being referred to the weight of (B); and
C) 30-60% by weight; preferably 35-55% by weight; more preferably 40-50 % by weight of a copolymer of ethylene and propylene containing from 25.0% to 75.0% by weight; preferably from 37.0% to 65.0% by weight; more preferably from 45.0 % to 58.0 % by weight of ethylene units and containing from 40.0 % to 95.0 % by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100;
the amounts, wt%, of T1 +T2 being 100 wt%.

Component (A) preferably has the melt flow rate (230°C/2.16 kg) ranging between 50 and 200 g/10 min; more preferably between 80 and 170 g/10 min.

Components (A)+ (B) blended together have the melt flow rate (230°C/2.16 kg) comprised between 0.1 and 70 g/10 min. preferably between 1 and 50 g/10 min; more preferably between 8 and 40 g/10 min.

Preferably component B) has a density (determined according to ISO 1183 at 23°C) of from 0.940 to 0.965 g/cm$^3$. Component B) is an ethylene copolymer containing $C_3$-$C_8$ alpha-olefin derived units. Specific examples of such alpha-olefin comonomers are propylene, 1-butene, 1-pentene, 4-methyl-1-pentene, 1-hexene and 1-octene; 1-butene 1-hexene and 1-octene being preferred; 1-butene being the most preferred.

Preferably the component T2) has a melt flow rate (230°C/2.16 kg) comprised between 0.5 to 25 g/10min preferably from 0.8 to 20.0g/10min; even more preferably from 1.0 to 18.0g/10min..

Preferably, the component T2) has an intrinsic viscosity [η] (measured in tetrahydronaphthalene at 135 °C) of the xylene soluble fraction at 25°C comprised between 1.5 to 4.0 dl/g preferably the intrinsic viscosity is comprised between 2.0 and 3.5 dl/g; more preferably the intrinsic viscosity is comprised between 2.1 and 2.8 dl/g.

For the present disclosure the term "copolymer" means polymers containing two kinds of comonomers such as propylene and ethylene or ethylene and 1-butene.

Useful bitumens (T1) include solid, semi-solid or viscous distillation residues of the petroleum refinery process, consisting predominantly of high molecular weight hydrocarbons, the structure of which can be partially altered, for example by oxidation.

It has been found that the component T2) can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically, a

Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus, in a preferred embodiment, the polymer composition B) of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above-mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

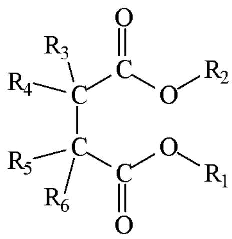

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably Ci-Cs alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrogen radical).

Examples of the said silicon compounds are those of formula $R^1_aR^2_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are $(tert\text{-}butyl)_2Si(OCH_3)_2$, (cyclohexyl)(methyl)Si $(OCH_3)_2$, $(phenyl)_2Si(OCH_3)_2$ and $(cyclopentyl)_2Si(OCH_3)_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

the polyolefin compositions T2) can also prepared as a physical blend of the separately-prepared components rather than as a reactor blend.

Moreover the mixture of the present disclosure may contain at least one other type of polymer, hereinafter identified as component (T3), in addition to the polymer composition (T2).

For example, the mixture may comprise, as component (T3), one or more olefinic or nonolefinic polymers. In particular, such additional polymers (T3) can be selected from the group consisting of amorphous or atactic polymers (in particular amorphous polyolefins such as amorphous polypropylene), styrene-butadiene-styrene (SBS) copolymers, ethylene polyvinyl acetate, low or high density polyethylene, and other polyolefins, in particular isotactic polypropylene and ethylene-propylene random copolymers.

Generally the said additional polymers (T3) are added, for example, in quantities greater than or equal to 0.5%, preferably from 0.5 to 30%, more preferably from 0.5 to 23% by weight with respect to the weight of the mixture. Even when the said additional polymers are present, the total quantity of component T2 and T3, in other words the amount of T2+T3, in the bituminous mixture is less than or equal to 40%, preferably 25% by weight with respect to the total weight of the mixture.

The polymer composition (T2) and all the other described components are incorporated in the bitumen according to known methods.

Preferably the mixing process is carried out at a temperature from 120 to 250°C; more preferably from 130°C to 180°C.

The mixtures of the present disclosure can be used in the commonly known applications of polymer modified bitumens, in particular for road paving and in the preparation of roofing membranes.

The following examples are given in order to illustrate, but not limit the present disclosure.

EXAMPLES

**CHARACTERIZATIONS**

**Xylene-soluble faction at 25°C (XS or Xs)**

The Xylene Soluble fraction was measured according to ISO 16152, 2005, but with the following deviations (between brakets what prescribed by the ISO 16152)

The solution volume is 250 ml (200 ml);

During the precipitation stage at 25°C for 30 min, the solution, for the final 10 minutes, is kept under agitation by a magnetic stirrer (30 min, without any stirring at all);

The final drying step is done under vacuum at 70°C (100 °C);

The content of said xylene-soluble fraction is expressed as a percentage of the original 2.5 grams and then, by difference (complementary to 100), the xylene unsoluble %;

XS of components B) and C) have been calculated by using the formula;

$$XS_{tot}=W_AXS_A+W_BXS_B+W_CXS_C$$

wherein $W_A$, $W_B$ and Wc are the relative amount of components A, B and C (A+B+C=1)

**Melt Flow Rate**

Measured according to ISO 1133 at 230°C with a load of 2.16 kg, unless otherwise specified.

**Intrinsic viscosity IV**

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.
The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

**Comonomer (C2 and C4) content determinated by using $^{13}$C NMR**

$^{13}$C NMR spectra of base polymers and their fractions were acquired on a Bruker AV600 spectrometer equipped with cryo probe, operating 150.91 MHz MHz in the Fourier transform mode at 120 °C. The peak of the S□□ carbon (nomenclature according C.J. Carman, R.A. Harrington and C.E. Wilkes, Macromolecules, 10, 3, 536 (1977)) was used as internal reference at 29.7 ppm. About 30 mg of sample were dissolved in 0.5 ml of 1,1,2,2 tetrachloro ethane d2 at 120 °C. Each spectrum was acquired with a 90 ° pulse, 15 seconds of delay between pulses and CPD to remove 1H-13C coupling. 512 transients were stored in 65 K data points using a spectral window of 9000 Hz. The assignments of the spectra were made according to M. Kakugo, Y. Naito, K. Mizunuma and T. Miyatake, Macromolecules 15(4), 1150 (1982) and E.T Hsieh and J.C. Randall, Macromolecules 15, 353-360 (1982).
The triad distribution was obtained using the following relations:

$$PPP = 100\ I_{10} / \Sigma$$

$$PPE = 100\ I_6 / \Sigma EPE = 100\ I_5 / \Sigma$$

$$BBB = 100\ I_3 / \Sigma$$

$$BBE = 100\ I_2 / \Sigma$$

$$EBE = 100\ I_{11} / \Sigma$$

$$XEX = 100\ I_{12} / \Sigma$$

$$XEE = 100\ (I_1 + I_4) / \Sigma$$

$$EEE = 100\ (0.5\ I_9 + 0.25\ (I_7 + I_8)) / \Sigma$$

wherein

$$\Sigma = I_1 + I_2 + I_3 + I_4 + I_5 + I_6 + 0.25\ I_7 + 0.25\ I_8 + 0.5\ I_9 + I_{10} + I_{11} + I_{12}$$

and wherein X can be propylene (P) or 1-butene (B), and $I_1$ to $I_{12}$ are the areas of the corresponding carbon atoms as reported below (only selected triads and assignements being reported):

| Number | Chemical Shift (ppm) | Carbon | Sequence |
|---|---|---|---|
| $I_1$ | 37.64 - 37.35 | $S_{\alpha\delta}$ | PEE |
| $I_2$ | 37.35 - 37.15 | $T_{\beta\delta}$ | BBE |
| $I_3$ | 35.27 - 34.92 | $T_{\beta\beta}$ | BBB |
| $I_4$ | 34.39 - 33.80 | $S_{\alpha\delta}$ | BEE |
| $I_5$ | 33.13 | $T_{\delta\delta}$ | EPE |
| $I_6$ | 30.93 - 30.77 | $T_{\beta\delta}$ | PPE |
| $I_7$ | 30.39 | $S_{\gamma\delta}$ | BEEE |
| $I_8$ | 30.29 | $S_{\gamma\delta}$ | PEEE |
| $I_9$ | 29.97 | $S_{\delta\delta}$ | EEE |
| $I_{10}$ | 29.14 -28.31 | $T_{\beta\beta}$ | PPP |
| $I_{11}$ | 26.70 - 26.55 | $2B_2$ | EBE |
| $I_{12}$ | 24.88 - 24.14 | $S_{\beta\beta}$ | XEX |

The molar content of ethylene (E), of propylene (P) and of 1-butene (B) is obtained from triads using the following relations:

$$E\ (m\%) = EEE + XEE + XEX$$

$$P\ (m\%) = PPP + PPE + EPE$$

$$B\ (m\%) = BBB + BBE + EBE$$

Other comonomers can be easily determined by using NMR procedures known in the art.

**Examples 1 - Preparation of polyolefin composition component T2**

Catalyst precursor

The solid catalyst component used in polymerization is a Ziegler-Natta catalyst component supported on magnesium chloride, containing titanium and diisobutylphthalate as internal donor, prepared as follows. An initial amount of microspheroidal $MgCl2{\cdot}2.8C2H5OH$ was prepared according to the method described in Example 2 of USP 4,399,054 but operating at 3,000 rpm instead of 10,000. The so obtained adduct was then subject to thermal dealcoholation at increasing temperatures from 30 to 130°C operating in nitrogen current until the molar alcohol content per mol of Mg is 1.16. Into a 1000 mL four-necked round flask, purged with nitrogen, 500 mL of TiCl4 were introduced at 0°C. While stirring, 30 grams of the microspheroidal $MgCl2{\cdot}1.16C2H5OH$ adduct (prepared as described above) were added. The temperature was raised to 120°C and kept at this value for 60 minutes. During the temperature increase, an amount of diisobutylphthalate was added such as to have a Mg/ diisobutylphthalate molar ratio of 18. After the mentioned 60 minutes, the stirring was stopped, the liquid siphoned off and the treatment with TiCl4 was repeated at 100°C for 1 hour in the presence of an amount of diisobutylphthalate such as to have a Mg/ diisobutylphthalate molar ratio of 27. After that time the stirring was stopped, the liquid siphoned off and the treatment with TiCl4 was repeated at 100°C for 30 min. After sedimentation and siphoning at 85°C the solid was washed six times with anhydrous hexane (6 x 100 ml) at 60 °C.

Catalyst system and prepolymerization

Before introducing it into the polymerization reactors, the solid catalyst component described above is contacted at 30 °C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio be equal to 4.

The catalyst system is then subjected to prepolymerization by maintaining it in suspension in liquid propylene at 50 °C for about 75 minutes before introducing it into the first polymerization reactor.

Polymerization

The polymerization is carried out in continuous in a series of three gas-phase reactors equipped with devices to transfer the product from the first reactor to the second one. Into the first gas phase polymerization reactor a propylene-based polymer (i) is produced by feeding in a continuous and constant flow the prepolymerized catalyst system, hydrogen (used as molecular weight regulator) and propylene all in the gas state. The propylene-based polymer (i) coming from the first reactor is discharged in a continuous flow and, after having been purged of unreacted monomers, is introduced, in a continuous flow, into the second gas phase reactor, together with quantitatively constant flows of hydrogen and ethylene, all in the gas state. In the second reactor a copolymer of ethylene (ii) is produced. The product coming from the second reactor is discharged in a continuous flow and, after having been purged of unreacted monomers, is introduced, in a continuous flow, into the third gas phase reactor, together with quantitatively constant flows of hydrogen, ethylene and propylene all in the gas state. In the third reactor an ethylene-propylene polymer (iii) is produced. Polymerization conditions, molar ratio of the reactants and composition of the copolymers obtained are shown in Table 1. The polymer particles exiting the third reactor are subjected to a steam treatment to remove the reactive monomers and volatile substances, and then dried. Thereafter the polymer particles are mixed with a usual stabilizing additive composition in a twin screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition is made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition.

The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite. The characteristics relating to the polymer composition, reported in Table 2.

Table 1 - Polymerization conditions

| Example | | 1 |
|---|---|---|
| 1st Reactor - component (A) | | |
| Temperature | °C | 60 |
| Pressure | barg | 16 |
| H2/C3- | mol. | 0.24 |
| Split | wt% | 22 |
| Xylene soluble of (A) (XSa) | wt% | 4.2 |
| MFR of (A) | g/10 min. | 110 |
| 2nd Reactor - component (B) | | |
| Temperature | °C | 80 |

(continued)

| | | |
|---|---|---|
| 2nd Reactor - component (B) | | |
| Pressure | barg | 18 |
| $H_2/C_2$- | mol. | 0.81 |
| $C_4$-/($C_2$- + $C_4$-) | mol. | 0.25 |
| $C_2$-/($C_2$- + $C_3$-) | mol. | 0.98 |
| Split | wt% | 32 |
| $C_2$- content of B * | wt% | 90 |
| $C_4$- content of B * | wt% | 10 |
| Xylene soluble of B ($XS_B$) * | wt% | 16.0 |
| Xylene soluble of A+B) | wt% | 12.0 |
| MFR of (A+B) | g/10 min. | 35.9 |
| 3rd Reactor - component (C) | | |
| Temperature | °C | 65 |
| Pressure | barg | 18 |
| $H_2/C_2$- | mol. | 0.17 |
| $C_2$-/($C_2$- + $C_3$-) | mol. | 0.42 |
| Split | wt% | 46 |
| $C_2$- content of C * | wt% | 52 |
| Xylene soluble of (C) (XSc)* | wt% | 83 |
| C2- = ethylene; C3- = propylene; C4- = 1-butene (IR); split = amount of polymer produced in the concerned reactor. * Calculated values. | | |

Comparative example 2

Comparative example 2 is an heterophasic copolymer having an homopolymer matrix and a propylene ethylene rubber phase. The feature of the polymer of comparative example 2 are reported on table 2

Table 2

| Example | | 1 | comp 2 |
|---|---|---|---|
| component A | | | |
| C2 content | wt% | 0 | 3 |
| $XS_A$ | wt% | 4.2 | 6.5 |
| MFR | g/10 min | 110 | 23 |
| split | wt% | 22 | 32 |
| component B | | | |
| $XS_B$* | wt% | 16 | 90.5 |
| C2 content* | wt% | 90.0 | 47.3 |
| C4 content* | wt% | 10.0 | 0 |
| split | wt% | 32 | 36 |
| MFR A+B | g/10 min | 35.9 | 1.20 |

(continued)

| Component C | | | |
|---|---|---|---|
| $XS_C$* | wt% | 83 | 52 |
| C2 content* | wt% | 52 | 27.5 |
| split | wt% | 44.6 | 32 |
| total composition | | | |
| MFR | g/10 min | 1.61 | 0.5 |
| IV on soluble in Xylene | dl/g | 2.4 | 3.2 |
| * Calculated values | | | |

**Bitumen from the polymer of example 1 and comparative example 2**

The polymer of example 1 and comparative example 2 have been blended with bitumen. The blends contain 5% of the polymers of example 1 (T2) and comparative example 2 (T2) and 95% of bitumen (T1). The two composition are marked as B1 e B2

**Asphalt**

5% of B1 and B2 has been mixed with sand, stone and gravel to obtain asphalt. A black sample obtained by using bitumen (T1) without T2 and sand, stone and gravel has been produced (sample C1).
The feature of the asphalt obtained has measured and the results are reported on table 3.

Table 3

| Asphalt | Modulus (MPa) 30°C/20°C | CTI ($N/mm^2$) | RTI ($N/mm^2$) |
|---|---|---|---|
| from ex 1 (B1) | 6220/11700 | 182 | 1.28 |
| from comp ex 2 (B2) | 4075/9700 | 160 | 1.23 |
| Asphalt from bitumen without T2 (sample C1) | 2800/7400 | 114 | 1.06 |

Modulus has been measured according to EN 12697-26 (Annex A) - method for characterizing the stiffness by indirect tensile test

CTI, Coefficient of Indirect Tensile strength, and RT Indirect Tensile strength, has been measured according to EN 12697-23 on a sample having a diameter of 150 mm. From table 3 the superior features of the asphalt obtained according to the present invention clearly result.

**Bitumen from the polymer of example 1 and comparative example 3**

The polymer of example 1 have been blended with bitumen. The blends contain 4wt% and 5wt% of the polymers of example 1 (T2) T1 is the bitumen without additives. The compositions are marked as B3, B4,
The features of the obtained bitumen are reported on table 4

Table 4

| | | blank | B3 | B4 |
|---|---|---|---|---|
| T1 | Wt% | 100 | 96 | 95 |
| T2 ex 1 | Wt% | | 4 | 5 |
| R&B | °C | 43 | 58 | 80 |
| PEN | (dmm) | 77 | 57 | 48 |

The properties of the polymer composition/bitumen mixtures were determined as follows.

| Property | Method |
|---|---|
| Ring & Ball (R&B): | EN 1427:2015; |
| Penetration (PEN): | EN 1426:2015; |

The R&B test determines the temperature at which a layer of bitumen, in a brass ring, experiences a certain deformation under the weight of a steel ball as the temperature rises.

The penetration test determines depth, measured in 1/10 mm, to which a 100 g needle penetrates in 5 seconds into the bitumen at a temperature of 25 °C.

From table 4 the superior features of the bitumen obtained according to the present invention clearly result.

## Claims

1. A mixture comprising:

T1) from 99 wt% to 75 wt% of bitumen , and
T2) from 1 wt% to 25 wt% of polymer composition comprising the following components,

A) 5-35% by weight of a propylene homopolymer or a propylene ethylene copolymer containing 90% by weight or more of propylene units; component A) containing 10.0 % by weight or less of a fraction soluble in xylene at 25°C (XSa), both the amount of propylene units and of the fraction $XS_A$ being referred to the weight of A);
B) 20-50% by weight; of a copolymer of ethylene and a $C_3$-$C_8$ alpha-olefin containing from 1.0 % to 20.0 % by weight of alpha-olefin units and containing 25.0 % by weight or less; of a fraction soluble in xylene at 25°C ($XS_B$), both the amount of alpha-olefin units and of the fraction $XS_B$ being referred to the weight of (B); and
C) 30-60% by weight of a copolymer of ethylene and propylene containing from 25.0 % to 75.0 % by weight of ethylene units and containing from 40.0 % to 95.0% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100;
the amounts, wt%, of T1 +T2 being 100 wt%.

2. The mixture according to claim 1 wherein in component T2):

Component A ranges from 10 % by weight to 30 % by weight;
Component B ranges from 25 % by weight to 45 % by weight; and
Component C ranges from 35 % by weight to 55 % by weight;

3. The mixture according to claims 1 or 2 wherein in component T2):

Component A ranges from 15 % by weight to 25 % by weight;
Component B ranges from 30 % by weight to 40 % by weight; and
Component C ranges from 40 % by weight to 50 % by weight;

4. The mixture according to anyone of claims 1-3 wherein in component T2) component A) is a propylene homopolymer.

5. The mixture according to anyone of claims 1-3 wherein in component T2) component B) contains from 5.0% to 15.0 % by weight; of alpha-olefin derived units.

6. The mixture according to anyone of claims 1-5 wherein in component T2) component C) is a copolymer of ethylene and propylene containing from 37% to 65% by weight of ethylene units.

7. The mixture according to anyone of claims 1-6 wherein in component T2) component A) has the melt flow rate

(230°C/2.16 kg) ranging between 50 and 200 g/10 min.

**8.** The mixture according to anyone of claims 1-7 wherein in component T2) component b) has the melt flow rate (230°C/2.16 kg) ranging between 0.1 and 70 g/10 min;

**9.** The mixture according to anyone of claims 1-8 wherein component T2) has a melt flow rate (230°C/2.16 kg) comprised between 0.5 to 25 g/10m.

**10.** The mixture according to anyone of claims 1-9 wherein component T2) has an intrinsic viscosity [η] (measured in tetrahydronaphthalene at 135 °C) of the xylene soluble fraction at 25°C comprised between 1.5 to 4.0 dl/g.

**11.** The mixture according to anyone of claims 1-10 wherein component T2) has an intrinsic viscosity [η] (measured in tetrahydronaphthalene at 135 °C) of the xylene soluble fraction at 25°C comprised between 2.0 to 3.5 dl/g.

**12.** The mixture according to anyone of claims 1-11 wherein T1 ranges from 98 wt% to 80 wt%; and T2 ranges from 2 wt% to 20 wt%.

**13.** The mixture according to anyone of claims 1-11 wherein T1 ranges from 97 wt% to 90 wt%; and T2 ranges from 3 wt% to 10 wt%.

**14.** The mixture according to anyone of claims 1-11 wherein T1 ranges from from 97 wt% to 92 wt%; and T2 ranges from 3 wt% to 8 wt%.

**15.** The mixture according to anyone of claims 1-14 wherein in component T2) component B) contains from 7.0% to 12.0 % by weight; of alpha-olefin derived units;

**Patentansprüche**

**1.** Mischung, umfassend:

T1) 99 Gew.% bis 75 Gew.% Bitumen und
T2) 1 Gew.% bis 25 Gew.% Polymerzusammensetzung, umfassend die folgenden Komponenten:

A) 5 bis 35 Gew.% von einem Propylenhomopolymer oder einem Propylen-EthylenCopolymer, das 90 Gew.% oder mehr Propyleneinheiten enthält; wobei Komponente A) 10,0 Gew.% oder weniger von einer in Xylol bei 25 °C löslichen Fraktion ($XS_A$) enthält, wobei sich sowohl die Menge der Propyleneinheiten als auch diejenige der Fraktion $XS_A$ auf das Gewicht von A) beziehen;
B) 20 bis 50 Gew.% eines Copolymers von Ethylen und einem $C_3$- bis Cs-alpha-Olefin, das 1,0 Gew.% bis 20,0 Gew.% alpha-Olefineinheiten enthält und 25,0 Gew.% oder weniger von einer in Xylol bei 25 °C löslichen Fraktion ($XS_B$) enthält, wobei sich sowohl die Menge der alpha-Olefineinheiten als auch diejenige der Fraktion $XS_B$ auf das Gewicht von (B) beziehen; und
C) 30 bis 60 Gew.% eines Copolymers von Ethylen und Propylen, das 25,0 Gew.% bis 75,0 Gew.% Ethyleneinheiten enthält und 40,0 Gew.% bis 95,0 Gew.% von einer in Xylol bei 25 °C löslichen Fraktion (XSc) enthält, wobei sich sowohl die Menge der Ethyleneinheiten als auch diejenige der Fraktion XSc auf das Gewicht von (C) beziehen;

wobei die Mengen von (A), (B) und (C) sich auf das Gesamtgewicht von (A) + (B) + (C) beziehen, wobei die Summe der Mengen von (A), (B) und (C) 100 ergibt;
die Mengen in Gew.% von T1 + T2 100 Gew.% ergeben.

**2.** Mischung nach Anspruch 1, wobei in Komponente T2):

Komponente A im Bereich von 10 Gew.% bis 30 Gew.% liegt;
Komponente B im Bereich von 25 Gew.% bis 45 Gew.% liegt; und
Komponente C im Bereich von 35 Gew.% bis 55 Gew.% liegt.

**3.** Mischung nach Anspruch 1 oder 2, wobei in Komponente T2):

Komponente A im Bereich von 15 Gew.% bis 25 Gew.% liegt;
Komponente B im Bereich von 30 Gew.% bis 40 Gew.% liegt; und
Komponente C im Bereich von 40 Gew.% bis 50 Gew.% liegt.

4. Mischung nach einem der Ansprüche 1 bis 3, wobei in Komponente T2) Komponente A) ein Propylenhomopolymer ist.

5. Mischung nach einem der Ansprüche 1 bis 3, wobei in Komponente T2) Komponente B) 5,0 Gew.% bis 15,0 Gew.% von alpha-Olefin abgeleitete Einheiten enthält.

6. Mischung nach einem der Ansprüche 1 bis 5, wobei in Komponente T2) Komponente C) ein Copolymer von Ethylen und Propylen ist, das 37 Gew.% bis 65 Gew.% Ethyleneinheiten umfasst.

7. Mischung nach einem der Ansprüche 1 bis 6, wobei in Komponente T2) Komponente A) eine Schmelzflussrate (230 °C/2,16 kg) im Bereich von 50 bis 200 g/10 min aufweist.

8. Mischung nach einem der Ansprüche 1 bis 7, wobei in Komponente T2) Komponente B) eine Schmelzflussrate (230 °C/2,16 kg) im Bereich von 0,1 bis 70 g/10 min aufweist.

9. Mischung nach einem der Ansprüche 1 bis 8, wobei Komponente T2) eine Schmelzflussrate (230 °C/2,16 kg) zwischen 0,5 bis 25 g/10 min aufweist.

10. Mischung nach einem der Ansprüche 1 bis 9, wobei Komponente T2) eine Grenzviskosität [η] (gemessen in Tetrahydronaphthalin bei 135 °C) der in Xylol löslichen Fraktion bei 25 °C aufweist, die zwischen 1,5 und 4,0 dl/g liegt.

11. Mischung nach einem der Ansprüche 1 bis 10, wobei Komponente T2) eine Grenzviskosität [η] (gemessen in Tetrahydronaphthalin bei 135 °C) der in Xylol löslichen Fraktion bei 25 °C aufweist, die zwischen 2,0 und 3,5 dl/g liegt.

12. Mischung nach einem der Ansprüche 1 bis 11, wobei T1 im Bereich von 98 Gew.% bis 80 Gew.% liegt; und T2 im Bereich von 2 Gew.% bis 20 Gew.% liegt.

13. Mischung nach einem der Ansprüche 1 bis 11, wobei T1 im Bereich von 97 Gew.% bis 90 Gew.% liegt; und T2 im Bereich von 3 Gew.% bis 10 Gew.% liegt.

14. Mischung nach einem der Ansprüche 1 bis 11, wobei T1 im Bereich von 97 Gew.% bis 92 Gew.% liegt; und T2 im Bereich von 3 Gew.% bis 8 Gew.% liegt.

15. Mischung nach einem der Ansprüche 1 bis 14, wobei in Komponente T2) Komponente B) 7,0 Gew.% bis 12,0 Gew.% von alpha-Olefin abgeleitete Einheiten enthält.

## Revendications

1. Mélange comprenant :

T1) 99 % en poids à 75 % en poids de bitume et
T2) 1 % en poids à 25 % en poids d'une composition polymère comprenant les constituants suivants :

A) 5-35% en poids d'un homopolymère de propylène ou d'un copolymère de propylène-éthylène contenant 90 % en poids ou plus de motifs de propylène ; le constituant A) contenant 10,0 % en poids ou moins d'une fraction soluble dans le xylène à 25 °C ($XS_A$), à la fois la quantité de motifs de propylène et de la fraction $XS_A$ se rapportant au poids de A) ;
B) 20-50 % en poids d'un copolymère d'éthylène et d'une alpha-oléfine en $C_3$-$C_8$ contenant 1,0 % à 20,0 % en poids de motifs d'alpha-oléfine et contenant 25,0 % en poids ou moins d'une fraction soluble dans le xylène à 25 °C ($XS_B$), à la fois la quantité de motifs d'alpha-oléfine et de la fraction $XS_B$ se rapportant au poids de (B) ; et
C) 30-60 % en poids d'un copolymère d'éthylène et de propylène contenant 25,0 % à 75,0 % en poids de motifs d'éthylène et contenant 40,0 % à 95,0 % en poids d'une fraction soluble dans le xylène à 25 °C (XSc), à la fois la quantité de motifs d'éthylène et de la fraction XSc se rapportant au poids de (C) ;

les quantités de (A), (B) et (C) se rapportant au poids total de (A) + (B) + (C), la somme des quantités de (A) + (B) + (C) valant 100 ;
les quantités, en % en poids, de T1 +T2 valant 100 % en poids.

**2.** Mélange selon la revendication 1, dans lequel, dans le constituant T2) :

le constituant A représente 10 % en poids à 30 % en poids ;
le constituant B représente 25 % en poids à 45 % en poids ; et
le constituant C représente 35 % en poids à 55 % en poids.

**3.** Mélange selon les revendications 1 ou 2, dans lequel, dans le constituant T2) :

le constituant A représente 15 % en poids à 25 % en poids ;
le constituant B représente 30 % en poids à 40 % en poids ; et
le constituant C représente 40 % en poids à 50 % en poids.

**4.** Mélange selon l'une quelconque des revendications 1 à 3, dans lequel, dans le constituant T2), le constituant A) est un homopolymère de propylène.

**5.** Mélange selon l'une quelconque des revendications 1 à 3, dans lequel, dans le constituant T2), le constituant B) contient 5,0 % à 15,0 % en poids de motifs dérivés d'alpha-oléfine.

**6.** Mélange selon l'une quelconque des revendications 1 à 5, dans lequel, dans le constituant T2), le constituant C) est un copolymère d'éthylène et de propylène contenant 37 % à 65 % en poids de motifs éthylène.

**7.** Mélange selon l'une quelconque des revendications 1 à 6, dans lequel, dans le constituant T2), le constituant A) présente l'indice de fluidité à chaud (230 °C/2,16 kg) situé dans la plage entre 50 et 200 g/10 min.

**8.** Mélange selon l'une quelconque des revendications 1 à 7, dans lequel, dans le constituant T2), le constituant B) présente l'indice de fluidité à chaud (230 °C/2,16 kg) situé dans la plage entre 0,1 et 70 g/10 min.

**9.** Mélange selon l'une quelconque des revendications 1 à 8, dans lequel le constituant T2) présente un indice de fluidité à chaud (230 °C/2,16 kg) situé entre 0,5 à 25 g/10 min.

**10.** Mélange selon l'une quelconque des revendications 1 à 9, dans lequel le constituant T2) présente une viscosité intrinsèque [η] (mesurée dans le tétrahydronaphtalène à 135 °C) de la fraction soluble dans le xylène à 25 °C située entre 1,5 et 4,0 dl/g.

**11.** Mélange selon l'une quelconque des revendications 1 à 10, dans lequel le constituant T2) présente une viscosité intrinsèque [η] (mesurée dans le tétrahydronaphtalène à 135 °C) de la fraction soluble dans le xylène à 25 °C située entre 2,0 et 3,5 dl/g.

**12.** Mélange selon l'une quelconque des revendications 1 à 11, dans lequel T1 représente 98 % en poids à 80 % en poids ; et T2 représente 2 % en poids à 20 % en poids.

**13.** Mélange selon l'une quelconque des revendications 1 à 11, dans lequel T1 représente 97 % en poids à 90 % en poids ; et T2 représente 3 % en poids à 10 % en poids.

**14.** Mélange selon l'une quelconque des revendications 1 à 11, dans lequel T1 représente 97 % en poids à 92 % en poids ; et T2 représente 3 % en poids à 8 % en poids.

**15.** Mélange selon l'une quelconque des revendications 1 à 14, dans lequel, dans le constituant T2), le constituant B) contient 7,0 % à 12,0 % en poids de motifs dérivés d'alpha-oléfine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 411627 A
- EP 592852 A
- WO 2009068371 A
- US 4399054 A
- EP 45977 A
- EP 361493 A
- EP 728769 A


### Non-patent literature cited in the description


- **HUGGINS, M.L.** *J. Am. Chem. Soc.,* 1942, vol. 64, 2716
- **M. KAKUGO ; Y. NAITO ; K. MIZUNUMA ; T. MIYATAKE.** *Macromolecules,* 1982, vol. 15 (4), 1150
- **E.T HSIEH ; J.C. RANDALL.** *Macromolecules,* 1982, vol. 15, 353-360